# EUROPÄISCHE PATENTSCHRIFT

(11) **EP 2 451 553 B1**
(45) Veröffentlichungstag und Bekanntmachung des Hinweises auf die Patenterteilung: **05.03.2014**
(21) Anmeldenummer: 10730084.0
(22) Anmeldetag: 23.06.2010
(51) Int. Cl.: B01D 29/60, B01D 35/143, B01D 35/147, B01D 37/04, F15B 21/04

(54) **FILTEREINRICHTUNG**
FILTER DEVICE
DISPOSITIF DE FILTRATION

(30) Priorität: 10.07.2009 DE 102009032572
(43) Veröffentlichungstag der Anmeldung: 16.05.2012
(73) Patentinhaber: Hydac Filtertechnik GmbH, 66280 Sulzbach/Saar (DE)
(72) Erfinder: LAUER, Viktor Josef, 66809 Nalbach (DE); FREIDINGER, Martin, 66130 Saarbrücken (DE); MULLER, Yves, F-57600 Gaubiving (FR)
(74) Vertreter: Bartels, Martin Erich Arthur
(86) Internationale Anmeldenummer: PCT/EP2010/003836
(87) Internationale Veröffentlichungsnummer: WO 2011/003516

(56) Entgegenhaltungen:
- EP-A2- 0 737 502
- WO-A2-2007/011223
- DE-A1- 4 206 420
- DE-A1- 19 511 482
- DE-A1-102007 056 362
- US-A- 3 945 208

## Beschreibung

Die Erfindung betrifft eine Filtereinrichtung zum Filtern von Leckölmengen aus Hydrauliksystemen, wobei bei den Hydrauliksystemen Hydrauliköl aus einem Tank über eine Saugleitung ansaugbar ist und Lecköl über eine Leckölleitung zur Schmutzseite eines Leckölfilters der Filtereinrichtung zuführbar ist, von dessen Reinseite gefiltertes Lecköl zum Tank rückführbar ist.

Derartige, dem Stand der Technik entsprechende Filtereinrichtungen ermöglichen die Rückgabe der im Betrieb anfallenden Leckölmengen in den Systemkreislauf, ohne dass die Gefahr besteht, dass vom Lecköl mitgeführte Verschmutzungen, seien es Abriebpartikel oder aus Leitungen mitgeführte Schmutzpartikel, in den Tank und damit in das System eingetragen werden. Die im Betrieb anfallenden Leckölmengen können, je nach Betriebsbedingungen des Systems, verhältnismäßig stark schwanken oder, je nach dem, aus welcher Systemkomponente das Lecköl austritt, unterschiedlich große Volumenströme besitzen. Für den betreffenden Leckölfilter ergeben sich daher verhältnismäßig stark schwankende Betriebsbedingungen.

Aus der US 3 945 208 geht eine Filteranordnung für ein schlepperintegriertes Hydrauliksystem hervor. Aus einem Tank kann Hydraulikflüssigkeit mit einer ersten Pumpe angesaugt und einem Verbraucher zugeführt werden. Anschließend wird die Hydraulikflüssigkeit einem Filter zugeführt, dem ein Rückschlagventil nachgeschaltet ist. Das Rückschlagventil ist ausgangsseitig mit dem Tank und der Eingangsseite einer Kolbenpumpe verbunden.

Die EP 0 737 502 A2 offenbart ein Filter zur Reinigung eines hydraulischen Mediums. In einem Kopfteil ist im Fluideinlass ein Drosselventil und eine Blende angeordnet. Ferner ist ein Bypass-Ventil vorgesehen, um bei einem verblockten Filtermedium eine direkte Überleitung der Hydraulikflüssigkeit von der Schmutzseite zur Reinseite des Filters zu ermöglichen.

In Hinblick auf diese Problematik stellt sich die Erfindung die Aufgabe, eine Filtereinrichtung zum Filtern von Leckölmengen zur Verfügung zu stellen, die sich, insbesondere auch bei einem Anfall unterschiedlicher Leckölmengen, durch ein günstiges Betriebsverhalten auszeichnet.

Erfindungsgemäß ist diese Aufgabe durch eine Filtereinrichtung gelöst, die die Merkmale des Patentanspruches 1 in seiner Gesamtheit aufweist.

Eine wesentliche Besonderheit der Erfindung besteht demgemäß darin, dass im Leckölfilter eine Ventilanordnung vorgesehen ist, über die eine Fluidverbindung zwischen der Reinseite des Leckölfilters und der Saugleitung freigebbar ist und deren erster Steueranschluss über eine Steuerleitung mit einem Leckölanschluss des Leckölfilters verbunden ist. Dadurch eröffnet sich die vorteilhafte Möglichkeit, bedarfsweise eine Absenkung des Lecköldruckes vorzunehmen, indem der in der Saugleitung im Betrieb herrschende Saugdruck an der Reinseite des Leckölfilters angelegt wird. Dadurch kann bei einem betriebsbedingten Ansteigen von Leckölmengen einem sich dabei am Leckölfilter aufbauenden höheren Differenzdruck effektiv entgegengewirkt werden, sodass ein erwünscht niedriges Druckniveau in der Leckölleitung auch bei schwankenden Leckölmengen beibehalten werden kann. Wenn beispielsweise eine Verstellpumpe in der Saugleitung angeordnet ist, treten größere Leckölmengen dann aus, wenn die Pumpe auf hohe Förderleistung eingestellt ist, was an sich zu einem höheren Druckabfall am Leckölfilter führt und damit einem erhöhten Druck der Leckölleitung entspricht. Gleichzeitig resultiert bei hoher Förderleistung ein entsprechend erhöhter Saugdruck der Saugleitung, der über die Ventilanordnung an der Reinseite des Leckölfilters wirksam werden kann. Es ist daher möglich, in der Leckölleitung eine Art Gleichgewichtszustand des Lecköldruckes zu erreichen.

Bei besonders vorteilhaften Ausführungsbeispielen weist die Ventilanordnung ein vorgesteuertes 2/2-Wegeventil auf, insbesondere in Form eines Proportionalventils.

In besonders vorteilhafter Weise kann die Anordnung so getroffen sein, dass der Steuerkolben des durch ein Schieberventil gebildeten Wegeventils mechanisch in die den Durchfluss zwischen seinem Eingangsanschluss und seinem Ausgangsanschluss sperrende Stellung vorgespannt ist und dass über einen mit der Leckölleitung verbundenen Steueranschluss der Lecköldruck am Steuerkolben gegen dessen mechanische Vorspannung wirksam ist. Entsprechend der Höhe der Vorspannung ist dadurch ein Schwellenwert für den ein Ansprechen der Ventilanordnung bewirkenden Lecköldruck vorgebbar.

Bei besonders vorteilhaften Ausführungsbeispielen ist über einen mit der Saugleitung verbundenen zweiten Steueranschluss auch der Saugdruck der Saugleitung am Steuerkolben gegen dessen mechanische Vorspannung wirksam. Dadurch wirkt sowohl der Saugdruck der Saugleitung, der beispielsweise bei Erhöhung der Förderleistung einer zugeordneten Verstellpumpe ansteigt, als auch der Lecköldruck der mechanischen Vorspannung des Wegeventils entgegen und begünstigt das Öffnungsverhalten des Wegeventils, um dem bei der erhöhten Förderleistung entsprechenden Anstieg der Leckölmenge und/oder des resultierenden Lecköldruckes entgegenzuwirken.

Bei besonders vorteilhaften Ausführungsbeispielen ist die Ventilanordnung in das Kopfteil eines zumindest ein Filterelement des Leckölfilters aufnehmenden Filtergehäuses integriert. Die gesamte Filtereinrichtung mit der den Druck der Leckölleitung steuernden Einrichtung ist dadurch zu einer kompakten Baueinheit zusammengefasst, die auch unter beengten Platzverhältnissen in Hydrauliksysteme einbaubar ist.

Die Anordnung kann dabei so getroffen sein, dass das Kopfteil innere Fluidführungen für Fluidwege zu den Anschlüssen der Ventilanordnung und zu Außenanschlüssen für die Leckölleitung, die Saugleitung und zu der die Reinseite des Leckölfilters mit dem Tank verbindenden Tankleitung aufweist. Dadurch sind an der Baueinheit keine äußeren Verbindungsleitungen für die den Lecköldruck steuernde Einrichtung erforderlich.

Diesbezüglich kann die Anordnung mit Vorteil so getroffen sein, dass im Kopfteil eine Bohrung als Ventilgehäuse des darin verschiebbaren Steuerkolbens des Wegeventils ausgebildet ist und dass eine Fluidführung vom Anschluss der Saugleitung zum Ausgangsanschluss an der Bohrung des Ventilgehäuses führt.

Bei Ausführungsbeispielen, bei denen das jeweilige Filterelement im Betrieb von der Außenseite des Elementes her zu einem inneren Filterhohlraum hin durchströmt wird, ist die Anordnung vorzugsweise so getroffen, dass der Anschluss der Leckölleitung am Kopfteil in eine Fluidführung mündet, die im Filtergehäuse zu der die Schmutzseite bildenden Außenseite des zumindest einen Filterelementes sowie zu einem am Ende der Bohrung des Ventilgehäuses befindlichen Steueranschluss des Wegeventils führt.

Eine besonders kompakte Bauweise bei einem von Außen nach Innen durchströmten'Filterelement ergibt sich, wenn im Kopfteil eine Fluidführung von dem die Reinseite bildenden inneren Filterhohlraum des Filterelementes zu dem Eingangsanschluss an der Bohrung des Ventilgehäuses sowie zum Anschluss für die Tankleitung führt.

Um in der bei Filtereinrichtungen üblichen Weise eine Absicherung gegen ein durch Verschmutzung blockiertes Filterelement zu gewährleisten, kann im Kopfteil eine Fluidführung von der Schmutzseite des Filtergehäuses zu der an die Reinseite des Filterelements angrenzenden Fluidführung durch ein Bypassventil sperrbar sein, das durch einen über einen Schwellenwert liegenden Druck der Schmutzseite entsperrbar ist.

Nachstehend ist die Erfindung anhand eines in der Zeichnung dargestellten Ausführungsbeispieles im Einzelnen erläutert. Es zeigen:
- Fig. 1: eine schematisch vereinfachte Blockdarstellung lediglich eines Teilabschnittes eines Hydrauliksystems, das durch zwei Hydropumpen in Form von Verstellpumpen druckversorgt ist, wobei entstehende Leckölmengen über ein Ausführungsbeispiel des erfindungsgemäßen Filtereinrichtung rückführbar sind;
- Fig. 2: eine schematisch vereinfacht und abgebrochen gezeichnete Schnittdarstellung eines Ausführungsbeispieles der erfindungsgemäßen Filtereinrichtung und
- Fig. 3: eine perspektivische Schrägansicht einer praktischen Ausführung des Ausführungsbeispieles, wobei das Kopfteil des Leckölfilters aufgeschnitten dargestellt ist.

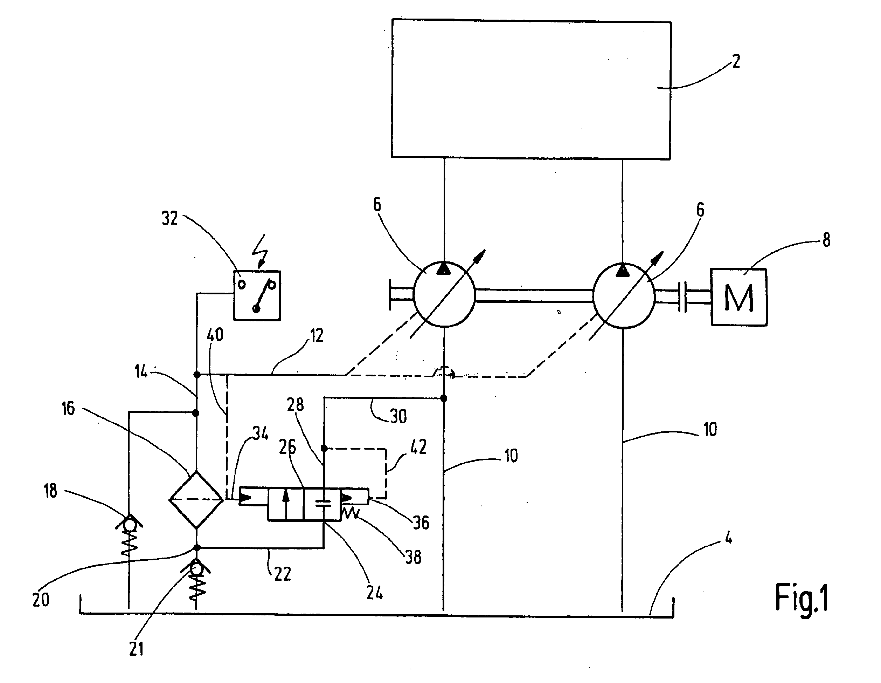

Nachstehend ist die Erfindung anhand eines Beispieles erläutert, bei dem die Filtereinrichtung einem Hydrauliksystem zugeordnet ist, von dem in Fig. 1 eine Antriebs- und Steuereinheit 2 in Blockdarstellung angedeutet ist und die aus einem Tank 4 mittels Verstellpumpen 6, die gemeinsam von einem Motor 8 angetrieben sind, mit Hydrauliköl versorgt wird. Die Saugleitungen zwischen Saugseite der Pumpen 6 und Tank 4 sind jeweils mit 10 bezeichnet. Das Lecköl der Pumpen 6 gelangt über eine gemeinsame Leckölleitung 12 zum Leckölanschluss 14 an der Schmutzseite des Leckölfilters 16. Ein Bypassventil 18, das zwischen Leckölanschluss 14 und Tank 4 eingefügt ist, öffnet druckbetätigt in üblicher Weise bei einem einen Schwellenwert übersteigenden Staudruck am Leckölfilter 16, beim vorliegenden Beispiel bei 0,8 bar.

Die Reinseite 20 des Filters 16 ist über ein Rückschlagventil 21, das bei einem niedrigen Druckniveau öffnet, im vorliegenden Beispiel bei 0,05 bar, mit dem Tank 4 verbunden. Außerdem ist die Reinseite 20 über einen Fluidweg 22 mit dem Eingangsanschluss 24 eines 2/2-Proportional-Wegeventils 26 verbunden, dessen Ausgangsanschluss 28 über einen Fluidweg 30 mit der Saugleitung 10 in Verbindung ist. Eine am Leckölanschluss 14 des Filters 16 angeschlossene Verschmutzungsanzeige, die mit 32 bezeichnet ist , erzeugt ein elektrisches Anzeigesignal bei einem an der Schmutzseite herrschenden Druck. Beim vorliegenden Beispiel, wo das Bypassventil 18 auf 0,8 bar eingestellt ist, kann die Verschmutzungsanzeige 32 beispielsweise auf einen Anzeigewert von 0,7 bar eingestellt sein.

Das Wegeventil 26 in Form eines Schieberventils ist in seine in der Zeichnung dargestellte Schließstellung mechanisch vorgespannt, aus der es hydraulisch über einen ersten Steueranschluss 34 und einen zweiten Steueranschluss 36 in die Durchlassstellung überführbar ist. Beim vorliegenden Beispiel entspricht die Vorspannung, die durch eine Druckfeder 38 auf den Steuerkolben des Ventils 26 ausgeübt wird, einer hydraulischen, am Steuerkolben anstehenden Druckdifferenz von 0,5 bar. Der erste Steueranschluss 34 ist über eine Steuerleitung 40 mit dem Leckölanschluss 14 verbunden. Der zweite Steueranschluss 36 ist über eine Steuerleitung 42 mit dem Fluidweg 30 in Verbindung und führt somit den in der Saugleitung 10 herrschenden Saugdruck.

Wenn im Betrieb die Verstellpumpen 6 auf geringe Förderleistung oder Nullleistung eingestellt sind, sodass die über die Leckölleitung 12 abströmende Leckölmenge gering ist und am funktionsfähigen Filterelement des Leckölfilters 16 demgemäß kein wesentlicher Druckabfall stattfindet, sodass der Lecköldruck in der Leckölleitung 12 gering ist und somit über die Steuerleitung 40 kein Öffnungsdruck am ersten Steueranschluss 34 anliegt, verbleibt das Wegeventil 26 durch seine mechanische Vorspannung in der Schließstellung. Da bei geringer oder fehlender Förderleistung der Verstellpumpen 6 in der Saugleitung 10 auch praktisch kein Saugdruck herrscht, ist über den Fluidweg 30 und die zweite Steuerleitung 42 auch am zweiten Steueranschluss 36 des Wegeventils 26 kein Druck wirksam, der der Vorspannung des Steuerkolbens entgegenwirken könnte. Bei geschlossenem Wegeventil 26 strömt somit die gefilterte Leckölmenge über das auf den geringen Öffnungsdruck eingestellte Rückschlagventil 21 zum Tank 4 ab.

Wenn andererseits die Verstellpumpen 6 auf hohe Förderleistung eingestellt sind, sodass über die Leckölleitung 12 eine größere Leckölmenge zum Filter 16 fließt und sich am Filter 16 ein entsprechender Staudruck aufbaut, steht am ersten Steueranschluss 34 des Wegeventils 26 ein entsprechender Öffnungsdruck zur Verfügung. Da gleichzeitig bei erhöhter Förderleistung der Verstellpumpen 6 sich in der Saugleitung 10 ein entsprechender Saugdruck aufbaut, der über den Fluidweg 30 und die zweite Steuerleitung 42 am zweiten Steueranschluss 36 des Ventils 26 im Öffnungssinne wirksam ist, wirkt der Vorpannung des Ventils 26 nicht nur der Lecköldruck, sondern zusätzlich der Saugdruck der Saugleitung 10 entgegen, sodass bei der beim Beispiel gegebenen Vorspannung des Ventils 26 von 0,5 bar ein Öffnen des Ventils 26 bei einem Lecköldruck von weniger als 0,5 bar erfolgt. Genauer ausgedrückt würde beim genannten Beispiel bei einem Saugdruck von beispielsweise 0,2 bar in der Saugleitung 10 ein Lecköldruck von 0,5 bar minus 0,2 bar, d.h. von 0,3 bar ausreichen, um das Ventil 26 zu öffnen. Sobald dies geschieht, ist die Saugleitung 10 über die Fluidwege 30 und 22 mit der Reinseite 20 des Filters 16 verbunden, sodass der Saugdruck der Saugleitung 10 am Filter 16 wirksam ist und eine Absenkung des Lecköldruckes bewirkt, das gefiltert über die Fluidwege 22 und 30 zur Saugleitung 10 strömt. Das Rückschlagventil 21 ist in diesem Falle unter der Wirkung des Saugdruckes geschlossen.

Wie ersichtlich, ist daher beim vorliegenden Beispiel im Leerlaufbetrieb, wo in der Saugleitung 10 kein Saugdruck wirksam ist, der Lecköldruck in der Leckölleitung 12 auf den der mechanischen Vorspannung entsprechenden Wert von 0,5 bar begrenzt. Bei Betriebszuständen unter Last mit ansteigender Leckölmenge und entsprechend ansteigendem Lecköldruck ist am ersten Steueranschluss 34 des Ventils 26 sowohl der Lecköldruck im Öffnungssinne wirksam als auch am zweiten Steueranschluss 36 des Ventils 26 der entsprechend angestiegene Saugdruck der Saugleitung 10 im Öffnungssinne wirksam. Dies bedeutet, dass die Öffnungscharakteristik der Ventilanordnung den Betriebsparametern angepasst ist. Insbesondere bei einem Wegeventil 26 in Form eines Proportionalventils lässt sich daher ein Gleichgewichtszustand des Lecköldruckes erreichen.

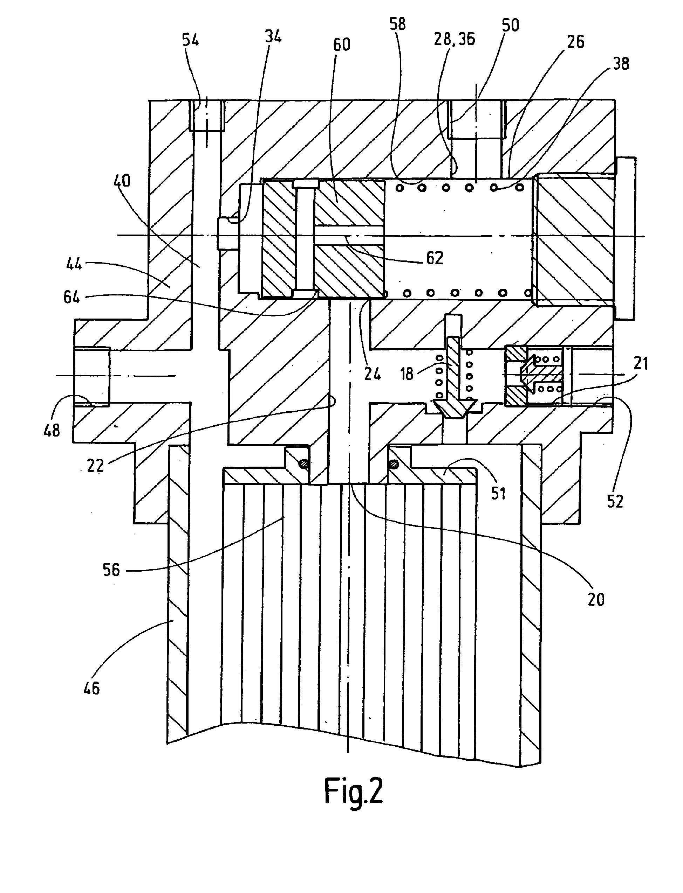

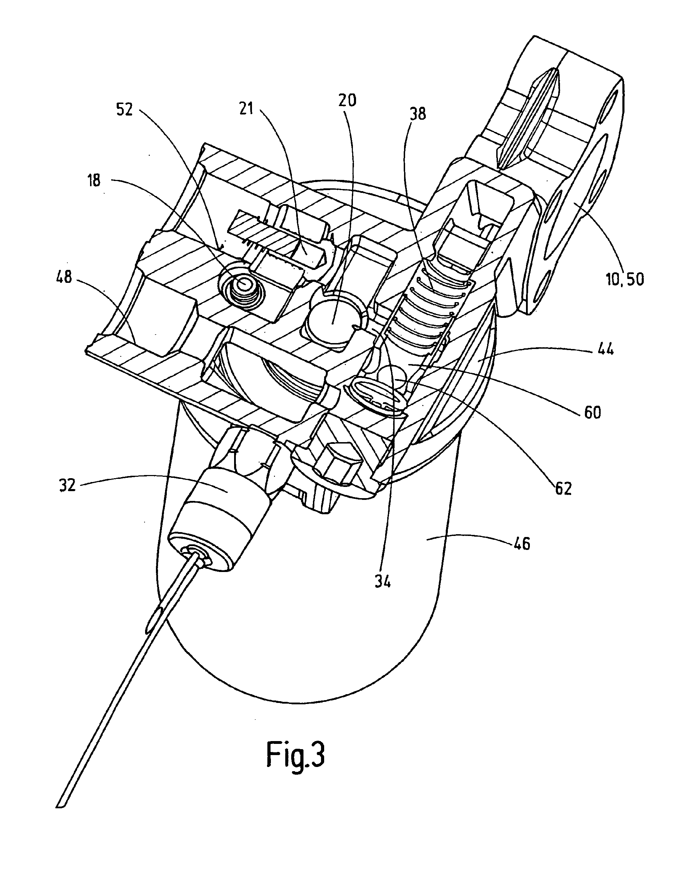

Die Fig. 2 und 3 verdeutlichen den Einbau der Filtereinrichtung in das Kopfteil 44 des Gehäuses 46 des Leckölfilters 16. Wie am Deutlichsten aus Fig. 2 zu ersehen ist, sind am Kopfteil 44 ein Außenanschluss 48 für die Leckölleitung 12, ein Außenanschluss 50 für die Saugleitung 10, ein Tankanschluss 52 und ein Anschluss 54 für die Verschmutzungsanzeige 32 vorgesehen. Zulaufendes Lecköl gelangt über den Anschluss 48 zur Außenseite, d.h. zur Schmutzseite, des Filterelementes 56, welches von außen nach innen zur der im inneren Filterhohlraum befindlichen Reinseite 20 hin durchströmt wird. Das Filterelement 56 ist mit seiner in Fig. 2 sichtbaren oberen Endkappe 51 an einer Aufnahme des Kopfteiles 44 so festgelegt, dass das gereinigte Lecköl aus der Reinseite 20 in den Fluidweg 22 gelangt, der zum Eingangsanschluss 24 des Wegeventils 26 führt. Von dem mit der Reinseite 20 verbundenen Fluidweg 22 zweigt auch eine Verbindung zum Tankanschluss 52 ab, wobei dem Tankanschluss 52 das Rückschlagventil 21 vorgeschaltet ist. Das Bypassventil 18 ermöglicht eine Direktverbindung zwischen der Außenseite (Schmutzseite) des Filterelementes 56 und dem Leitungszweig zum Tankanschluss 52.

Der Fluidweg zwischen Leckölanschluss 48 und dem Anschluss 54 für die Verschmutzungsanzeige bildet die zum ersten Steueranschluss 34 des Wegeventils 26 führende Steuerleitung 40. Dieser Steueranschluss 34 befindet sich bevorzugt an einem axialen Ende der Bohrung 58, die das Ventilgehäuse des Wegeventils 26 bildet, in dem der Steuerkolben 60 axial beweglich ist. Der Kolben 60 grenzt gleichflächig an den Druckraum mit dem ersten Steueranschluss 34 und an den entgegengesetzten Druckraum an, an dem sich der zweite Steueranschluss 36, der gleichzeitig den Saugleitungsanschluss 50 bildet, befindet. Die in diesem Druckraum befindliche Druckfeder 38 spannt den Kolben 60 in Fig. 2 nach links in die gezeigte Schließstellung vor. Wenn der Kolben 60 gegen die Federkraft durch den Lecköldruck am Steueranschluss 34 und den unterstützenden Saugdruck am zweiten Steueranschluss 36 in Fig. 2 nach rechts bewegt wird, bilden an Steuerkanten 64 mündende Kanäle 62 im Kolben 60 die Fluidverbindung vom Eingangsanschluss 24 zu dem mit dem Saugleitungsanschluss 50 verbundenen Druckraum in der Bohrung 58.

Die Fig. 3 verdeutlicht eine praktische Bauweise mit in das Kopfteil 44 des Filtergehäuses 46 integrierter Ventilanordnung, wobei die Bauteile mit den gleichen Bezugszahlen entsprechend der Fig. 1 und 2 bezeichnet sind. Wie ersichtlich, ist die Ventilanordnung mit dem zugehörigen Gehäuse 46 des Leckölfilters zu einer kompakten Baueinheit zusammengefasst.

## Patentansprüche

1. Filtereinrichtung zum Filtern von Leckölmengen aus Hydrauliksystemen, wobei bei den Hydrauliksystemen Hydrauliköl aus einem Tank (4) über eine Saugleitung (10) ansaugbar ist und Lecköl über eine Leckölleitung (12) zur Schmutzseite eines Leckölfilters (16) der Filtereinrichtung zuführbar ist, von dessen Reinseite (20) gefiltertes Lecköl zum Tank (4) rückführbar ist, **dadurch gekennzeichnet, dass** in dem Leckölfilter (16) eine Ventilanordnung (26) vorgesehen ist, über die zur Absenkung des Lecköldruckes in der Leckölleitung (12) eine Fluidverbindung (22, 30) zwischen der Reinseite (20) des Leckölfilters (16) und der Saugleitung (10) freigebbar ist und deren erster Steueranschluss (34) über eine Steuerleitung (40) mit einem Leckölanschluss (14) des Leckölfilters (16) verbunden ist.

2. Filtereinrichtung nach Anspruch 1, **dadurch gekennzeichnet, dass** die Ventilanordnung ein vorgesteuertes 2/2-Wegeventil (26), insbesondere Proportionalventil, aufweist.

3. Filtereinrichtung nach Anspruch 2, **dadurch gekennzeichnet, dass** der Steuerkolben (60) des durch ein Schieberventil gebildeten Wegeventils (26) mechanisch in die den Durchfluss zwischen seinem Eingangsanschluss (24) und seinem Ausgangsanschluss (28) sperrende Stellung vorgespannt ist und dass über einen mit der Leckölleitung (12) verbundenen Steueranschluss (34) der Lecköldruck am Steuerkolben gegen dessen mechanische Vorspannung (38) wirksam ist.

4. Filtereinrichtung nach Anspruch 3, **dadurch gekennzeichnet, dass** über einen mit der Saugleitung (10) verbundenen zweiten Steueranschluss (36) der Saugdruck der Saugleitung (10) am Steuerkolben (60) gegen dessen mechanische Vorspannung (38) wirksam ist.

5. Filtereinrichtung nach einem der Ansprüche 1 bis 4, **dadurch gekennzeichnet, dass** die Ventilanordnung (26) in das Kopfteil (44) eines zumindest ein Filterelement (56) des Leckölfilters (16) aufnehmenden Filtergehäuses (46) integriert ist.

6. Filtereinrichtung nach Anspruch 5, **dadurch gekennzeichnet, dass** das Kopfteil (44) innere Fluidführungen (22, 40) für Fluidwege zu den Anschlüssen (34) der Ventilanordnung (26) und zu Außenanschlüssen (48, 50) für die Leckölleitung (12), die Saugleitung (10) und zu der die Reinseite (20) des Leckölfilters (16) mit dem Tank (4) verbindenden Tankleitung aufweist.

7. Filtereinrichtung nach Anspruch 6, **dadurch gekennzeichnet, dass** im Kopfteil (44) eine Bohrung (58) als Ventilgehäuse des darin verschiebbaren Steuerkolbens (60) des Wegeventils (26) ausgebildet ist und dass eine Fluidführung (30) vom Anschluss (50) der Saugleitung (10) zum Ausgangsanschluss (36) an der Bohrung (58) des Ventilgehäuses führt.

8. Filtereinrichtung nach Anspruch 7, **dadurch gekennzeichnet, dass** der Anschluss (48) der Leckölleitung (12) am Kopfteil (44) an einer Fluidführung (40) mündet, die im Filtergehäuse (46) zu der die Schmutzseite bildenden Außenseite des zumindest einen Filterelementes (56) sowie zu einem am Ende der Bohrung (58) des Ventilgehäuses befindlichen Steueranschluss (34) des Wegeventiles (26) führt.

9. Filtereinrichtung nach einem der Ansprüche 6 bis 8, **dadurch gekennzeichnet, dass** im Kopfteil (44) eine Fluidführung (22) von dem die Reinseite (20) bildenden inneren Filterhohlraum eines Filterelements (56) zu dem Eingangsanschluss (24) an der Bohrung (58) des Ventilgehäuses sowie zum Anschluss (52) für die Tankleitung führt.

10. Filtereinrichtung nach Anspruch 8 oder 9, **dadurch gekennzeichnet, dass** im Kopfteil (44) eine Fluidführung von der Schmutzseite des Filtergehäuses (46) zu der an die Reinseite (20) des Filterelementes (56) angrenzenden Fluidführung (22) führt und durch ein Bypassventil (18) sperrbar ist, das durch einen über einen Schwellenwert liegenden Druck der Schmutzseite entsperrbar ist.

## Claims

1. A filter device for filtering oil leakage amounts from hydraulic systems, in the hydraulic systems hydraulic oil being able to be drawn in from a tank (4) via a suction line (10) and leakage oil being able to be supplied via a leakage oil line (12) to the dirty side of a leakage oil filter (16) of the filter device from the clean side (20) of which filtered leakage oil can be fed back to the tank (4), **characterised in that** a valve arrangement (26) is provided in the leakage oil filter (16) by means of which, in order to reduce the leakage oil pressure in the leakage oil line (12), a fluid connection (22, 30) between the clean side (20) of the leakage oil filter (16) and the suction line (10) can be released and the first control connection (34) of which is connected by a control line (40) to a leakage oil connection (14) of the leakage oil filter (16).

2. The filter device according to Claim 1, **characterised in that** the valve arrangement has a pilot-operated 2/2-way directional valve (26), in particular a proportional valve.

3. The filter device according to Claim 2, **characterised in that** the control piston (60) of the directional valve (26) formed by a spool valve is mechanically preloaded into the position blocking the through-flow between its input connection (24) and its output connection (28) and that the leakage oil pressure is effective at the control piston against its mechanical preload (38) by means of a control connection (34) connected to the leakage oil line (12).

4. The filter device according to Claim 3, **characterised in that** the suction pressure of the suction line (10) is effective at the control piston (60) against its mechanical preload (38) by means of a second control connection (36) that is connected to the suction line (10).

5. The filter device according to any of Claims 1 to 4, **characterised in that** the valve arrangement (26) is integrated into the head part (44) of a filter housing (46) that accommodates at least one filter element (56) of the leakage oil filter (16).

6. The filter device according to Claim 5, **characterised in that** the head part (44) has inner fluid guides (22, 40) for fluid paths to the connections (34) of the valve arrangement (26) and to outer connections (48, 50) for the leakage oil line (12), the suction line (10) and to the tank line connecting the clean side (20) of the leakage oil filter (16) to the tank (4).

7. The filter device according to Claim 6, **characterised in that** there is formed in the head part (44) a bore hole (58) as a valve housing of the control piston (60) of the directional valve (26) which can be displaced therein and that a fluid guide (30) leads from the connection (50) of the suction line (10) to the output connection (36) at the bore hole (58) of the valve housing.

8. The filter device according to Claim 7, **characterised in that** the connection (48) of the leakage oil line (12) empties at the head part (44) into a fluid guide (40) which leads within the filter housing (46) to the outside of the at least one filter element (56) that forms the dirty side as well as to a control connection (34) of the directional valve (26) located on the end of the bore hole (58) of the valve housing.

9. The filter device according to any of Claims 6 to 8, **characterised in that** in the head part (44) a fluid guide (22) leads from the inner filter cavity of a filter element (56) forming the clean side (20) to the input connection (24) at the bore hole (58) of the valve housing as well as to the connection (52) for the tank line.

10. The filter device according to Claim 8 or 9, **characterised in that** in the head part (44) a fluid guide leads from the dirty side of the filter housing (46) to the fluid guide (22) adjacent to the clean side (20) of the filter element (56) and can be blocked by a bypass valve (18) which can be released by a pressure of the dirty side that exceeds a threshold value.

## Revendications

1. Dispositif de filtration pour la filtration de quantités d'huile de fuite dans des systèmes hydrauliques, dans lequel, dans les systèmes hydrauliques, de l'huile hydraulique peut être aspirée d'une cuve (4) par un conduit (10) d'aspiration et de l'huile de fuite peut être envoyée, par un conduit (12) d'huile de fuite, au côté sale d'un filtre (16) d'huile de fuite du dispositif de filtration, du côté (20) propre duquel de l'huile de filtre filtrée peut être retournée à la cuve (4), **caractérisé en ce qu'**il est prévu, dans le filtre (16) d'huile de fuite, un agencement (26) de vanne, par lequel, pour abaisser la pression de l'huile de fuite dans le conduit (12) pour de l'huile de fuite, une liaison (22, 30) fluidique peut être libérée entre le côté (20) propre du filtre (16) d'huile de fuite et le conduit (10) d'aspiration et dont un premier raccord (34) de commande communique par un conduit (40) de commande avec un raccord (14) d'huile de fuite du filtre (16) d'huile de fuite.

2. Dispositif de filtration suivant la revendication 1, **caractérisé en ce que** l'agencement de vanne est une vanne (26) à 2/2 voies pilotée, notamment une vanne proportionnelle.

3. Dispositif de filtration suivant la revendication 2, **caractérisé en ce que** le piston (60) de commande de la vanne (26) à voies formée par une vanne à passage direct est précontraint mécaniquement dans la position obturant le passage entre son raccord (24) d'entrée et son raccord (28) de sortie et **en ce que**, par un raccord (34) de commande communiquant avec le conduit (12) pour de l'huile de fuite, la pression de l'huile de fuite sur le piston de commande est efficace à l'encontre de sa précontrainte (38) mécanique.

4. Dispositif de filtration suivant la revendication 3, **caractérisé en ce que**, par un deuxième raccord (36) de commande communiquant avec le conduit (10) d'aspiration, la pression d'aspiration du conduit (10) d'aspiration est efficace sur le piston (60) de commande à l'encontre de sa précontrainte (38) mécanique.

5. Dispositif de filtration suivant l'une des revendications 1 à 4, **caractérisé en ce que** l'agencement (26) de vanne est intégré dans la partie (44) de tête d'un corps (46) de filtre recevant au moins un élément (56) filtrant du filtre (16) d'huile de fuite.

6. Dispositif de filtration suivant la revendication 5, **caractérisé en ce que** la partie (44) de tête a des conduits (22, 24) intérieurs de fluide pour des trajets de fluide menant au raccord (34) de l'agencement (26) de vanne et à des raccords (48, 50) extérieurs pour le conduit (12) d'huile de fuite, le conduit (10) d'aspiration et au conduit de cuve mettant le côté (20) propre du filtre (16) d'huile de fuite en communication avec la cuve (4).

7. Dispositif de filtration suivant la revendication 6, **caractérisé en ce que**, dans la partie (44) de tête, est formé un trou (58) servant d'enveloppe de vanne du piston (60) de commande, qui y coulisse, de la vanne (26) à voies et **en ce qu'**un conduit (30) pour du fluide va du raccord (50) du conduit (10) d'aspiration au raccord (36) de sortie sur le trou (58) de l'enveloppe de vanne.

8. Dispositif de filtration suivant la revendication 7, **caractérisé en ce que** le raccord (48) du conduit (12) pour de l'huile de fuite débouche à la partie (44) de tête d'un conduit (40) pour du fluide, qui va, dans le corps (46) de filtre, au côté extérieur formant le côté sale du au moins un élément (56) filtrant, ainsi qu'à un raccord (34) de commande, se trouvant à l'extrémité du trou (58) de l'enveloppe de vanne, de la vanne (26) à voies.

9. Dispositif de filtration suivant l'une des revendications 6 à 8, **caractérisé en ce que**, dans la partie (44) de tête, un conduit (22) pour du fluide va⁻ de l'espace creux intérieur de filtre formant le côté (20) propre d'un élément (56) filtrant au raccord (24) d'entrée sur le trou (58) de l'enveloppe de vanne, ainsi qu'au raccord (52) pour le conduit de cuve.

10. Dispositif de filtration suivant la revendication 8 ou 9, **caractérisé en ce que**, dans la partie (44) de tête, un conduit pour du fluide va du côté sale du corps (46) de filtre au conduit (22) pour du fluide voisin du côté (20) propre de l'élément (56) filtrant et peut être obturé par une vanne (18) de dérivation, qui peut être débloquée par une pression du côté sale dépassant une valeur de seuil.
